# EUROPEAN PATENT APPLICATION

(11) **EP 1 686 486 A1**
(43) Date of publication of application: **02.08.2006**
(21) Application number: 04747328.5
(22) Date of filing: 09.07.2004
(51) Int. Cl.: G06F 12/14, G06F 13/00, G06F 15/00

(54) **INVALIDITY MONITORING PROGRAM, INVALIDITY MONITORING METHOD, AND INVALIDITY MONITORING SYSTEM**

(30) Priority: 17.11.2003 JP 2003387212
(71) Applicant: Intelligent Wave Inc., Tokyo 104-0033 (JP)
(72) Inventor: AOKI, Osamu 1403 CLIO REMINGTON HOUSE ASAGAYA, Suginami-ku, Tokyo 1660004 (JP); SHIRASUGI, Masaharu, Koto-ku, Tokyo 1350043 (JP); KOIDE, Kenichi Dai2 Araihaitsu 203, Edogawa-ku, Tokyo 1340085 (JP); KAWANO, Hiroaki, Chiba-shi, Chiba 2610003 (JP)
(74) Representative: Grünecker, Kinkeldey, Stockmair & Schwanhäusser Anwaltssozietät
(86) International application number: PCT/JP2004/009860
(87) International publication number: WO 2005/048114

(57) **Abstract**

For use in monitoring invalid data that causes a computer to execute an invalid operation, there is provided, an invalidity-monitoring program that can monitor input/output data sent to and received from not only a network, but also an externally connected device, and that allows a user to set a variety of invalidity determination rules and apply an efficient rule. A data-acquisition unit (14) acquires input/output data, which is flowing on a network or an externally connected bus, and the ID of an operator. An invalid-operation-determination unit (15) determines whether an operation is invalid by acquiring attribute information on a user corresponding to the ID from a user-storage unit (12), by referencing a rule, corresponding to the attribute information from the rules stored in an invalidity-rule-storage unit (13) and defined for the respective user, and in addition, by referencing a rule that generally determines an operation as invalid regardless of the attributes stored in the invalidity-rule-storage unit (13). If it is found that the operation is invalid, an interruption-processing-execution unit (16) stops the processing to be executed by the operation.

## Description

### BACKGROUND OF THE INVENTION

### Field of the Invention:

This invention relates to an invalidity-monitoring program, invalidity-monitoring method and invalidity-monitoring system for monitoring invalid data that causes a computer to execute an invalid operation.

### Description of the Related Art:

When a computer is connected to a network such as the Internet and used, it is necessary to prevent the input of invalid data from the outside, as well as prevent the flow of data or the leaking of data from the inside due to invalid operation of the computer. In order to prevent the input of invalid data, placing a firewall between internal networks such as an in-office LAN and blocking invalid data, or using anti-virus software in an internal network or individual computer terminal to prevent viruses is widely performed. In firewalls or anti-virus software, it is common for rules for determining invalid data from keywords, the IP address of the sender, or the like to be set in advance, and then determine whether or not data is invalid data by referencing those rules.

On the other hand, as a method for preventing the flow of data due to invalid operation, technology has been disclosed (refer to patent document 1) in which rules for data being sent to the network such as the right of access, sender, type of document sent, or the like are referenced, and when a possibility of invalidity is detected, transmission is interrupted.
Patent document 1: Japanese Patent Appl ication Laid-open No. 2002-232451

The aforementioned firewall, anti-virus software and invention disclosed in patent document 1 are each methods for preventing invalid access to or leaking of data from a network. However, invalid operation using a computer is not limited to methods via a network, for example, there is also a danger of the flow of information by methods not using a network such as invalid operation of a computer that is not connected to an external network by an unauthorized third party and outputting information stored on a computer to a printer or writing information to an external disc. In other words, it is preferred that monitoring of data that executes invalid operation be performed not only between a computer and network, but also on the driver level of computers connected to a printer or drive.

Also, as was explained above, current methods for monitoring inval id data are mainly based on stored rules such as keywords, IP addresses, MAC addresses, and the like, however, depending on the method used, there are limits on the contents of rules that can be stored. In order to perform determination accurately, it is preferable that the number of rules be increased as much as possible, however, when there are too many rules, a problem exists in that the processing required for determination becomes heavy. Therefore, it is effective to simplify rules from a variety of aspects as much as possible and store them, and to employ a system so that those rules are referenced efficiently.

Furthermore, level-based invalidity determination has problems in that by performing level-based determination alone using methods completely different than conventional methods, it is difficult to detect when an invalid operation that is not in accordance to the stored rules is being executed. Therefore, it is effective to be able to accurately determine whether or not there is a possibility of invalidity by understanding the operating patterns of new users.

### SUMMARY OF THE INVENTION

Taking into consideration the problems mentioned above, the object of the present invention is to provide an invalidity-monitoring program, invalidity-monitoring method and invalidity-monitoring system capable of monitoring data that is input or output between not only a computer and a network, but also between a computer and external devices when monitoring invalid data that executes invalid operation of a computer, and which allows the user to set and effectively apply various rules for determining invalidity.

A first aspect of the invention for solving the aforementioned problems is an invalidity-monitoring program for monitoring invalid data, which causes a computer to execute an invalid operation, and causes the computer to execute: a step of acquiring input/output data that is input or output over a network that is connected to the computer, or over an externally connected bus that connects the computer with an external device; a step of identifying ID information from the input/output data for identifying a user; a step of acquiring at least part of the attribute data corresponding to the ID information from a user-information-storage unit that stores attribute information for all users having authorization to use the computer; a step of referencing a determination-rule-storage unit that stores rules for determining whether the input/output data is invalid data, and determining whether the input/output data is invalid data; and a step of stopping execution by the input/output data when it is determined in the invalid-data-determination step that the input/output data is invalid data; and where the determination-rule-storage unit stores determination rules that correspond to user attributes; and in the step of determining whether the input/output data is invalid data, references the determination rules that correspond to attribute information acquired in the step of acquiring attribute information to determine whether the input/output data is invalid.

In this first aspect of the invention, by monitoring data that is input or output over not only a network, but also an externally connected bus of the computer, it is possible to monitor data that gives instructions not over a network for performing an operation such as an invalid printout or writing to a disc, and to interrupt that invalid operation. Also, by adding determination items corresponding to user attribute information, it is possible to diversify the rules.

In this first aspect of the invention, the computer can be used as a client, or can be used as a server over the network, as long as the computer is connected to a network and provided with an externally connected bus.
This network includes all networks that are capable of sending or receiving data such as an LAN, dial-up network or the like. The external device includes all peripheral devices that can be connected to a computer via an externally connected bus such as a printer, drive or the like. Invalid data is data related to invalid operation of the computer, such as an instruction to send a file to the outside that is prohibited to be sent, operation by an unauthorized user, etc. A user's age, sex, department, position, or the like can be used as user attribute information.

This first aspect of the invention can also cause the computer to execute: a step of referencing the user-information-storage unit and determining whether the user corresponding to the ID information has authorization to use the computer; and a step of stopping operation by the input/output data when it is determined in the step of determining authorization that there is no authorization to use the computer; and where the step of determining authorization is executed before the step of determining whether the input/output data is invalid data; and when it is determined in the step of determining authorization that there is no authorization to use the computer, causes the computer to not execute at least one of the following, the step of acquiring attribute information or the step of determining whether the input/output data is invalid data.

In this first aspect of the invention, user attributes are registered in advance so that they can be used as rule items, so it is possible to easily check whether or not a user performing an operation is authorized to use the computer. By determining whether a user is authorized to use the computer before rule determination, it is possible to improve efficiency of applying rules by performing a process to stop the operation before applying rules when it is determined in the first stage that the operation is by a user that is not authorized to use the computer.

Furthermore, this first aspect of the invention can also cause the computer to execute a step of referencing a profile-storage unit that stores log data related to the input/output data as profiles for each user, and comparing the input/output data that was acquired in the data-acquisition step with the normal operation trend of the user to determine whether operation is unusual; and stops the operation executed by the input/output data in the step of stopping operation executed by the input/output data also when it is determined in the step of determining whether operation is unusual that operation is unusual.

By collecting log data for each user in this way, a profile containing the characteristics of the operation of each user is created, and by referencing the profile in question and determining whether or not the user is performing unusual operation, it is possible to determine when there is a possibility that a third party is posing as an authorized user, which could not be determined by rules, and to determine operation, which even though it is in the range of being authorized, could be invalid operation that is not normally executed.

Moreover, this first aspect of the invent ion can also execute a process of interrupting a session in the step of stopping the operation executed by the input/output data when the input/output data is acquired from a network in the step of acquiring input/output data.

Furthermore, this first aspect of the invention can also stop the process of executing a driver in the step of stopping the operation executed by the input/output data when the input/output data is acquired from an externally connected bus in the step of acquiring input/output data.

In this first aspect of the invention, when it is determined that the process being executed by the computer is an inval id operation, processing is performed so that the execution of that operation is quickly stopped. When the process being executed is sending or receiving data over a network, it is possible to prevent leakage of information due to transmission of data to the outside by performing a process of interrupting the session being executed. When the process being executed is for operating an external device by way of an externally connected bus, it is possible to prevent leakage of information due to the output of data by stopping the process of executing the driver.

A second aspect of the invention is an invalidity-monitoring program for monitoring invalid data, which causes a computer to execute an invalid operation, and causes the computer to execute: a step of acquiring input/output data that is input or output over a network that is connected to the computer, or over an externally connected bus that connects the computer with an external device; a step of identifying ID information from the input/output data for identifying a user; a step of acquiring at least part of the attribute data corresponding to the ID information from a user-information-storage unit that stores attribute information for all users having authorization to use the computer; a step of referencing a determination-rule-storage unit that stores rules for determining whether the input/output data is invalid data, and determining whether the input/output data is invalid data; and a step of notifying the terminal being operated by the user or administrator that the operation being executed by the input/output data is an invalid operation when it is determined in the step of determining whether the input/output data is invalid that the input/output data is invalid data; and where the determination-rule-storage unit stores determination rules that correspond to user attributes; and in the step of determining whether the input/output data is invalid data, references the determination rules that correspond to attribute information acquired in the step of acquiring attribute information and determines whether said input/output data is invalid data.

Instead of stopping the process being executed by that data when it is determined that the input/output data is inval id data in the first aspect of the invention, in this second aspect of the invention, invalid data is handled by notifying the user that is executing a process with that data, or notifying the computer or terminal administrator.

The first and second aspects of the invention could also be specified as an invalidity-monitoring method that executes the aforementioned invalidity-monitoring program. Also, they can be constructed as an invalidity-monitoring system that uses the aforementioned invalidity-monitoring program.

In other words, the first aspect of the invention could also be constructed as an invalidity-monitoring system for monitoring invalid data, which causes a computer to execute an invalid operation, and comprising: a data-acquisition means that acquires input/output data that is input or output over a network that is connected to the computer, or over an externally connected bus that connects the computer with an external device; an ID-information-identification means that identifies ID information from the input/output data for identifying a user; a user-information-storage means that stores attribute information for all users having authorization to use the computer; an attribute-information acquisition means that acquires at least part of the attribute data corresponding to the ID information from the user-information-storage means; a determination-rule-storage means that stores rules for determining whether the input/output data is invalid data; an invalid-data-determination means that references the determination-rule-storage means, and determines whether the input/output data is invalid data; and a stoppage means that stops execution by the input/output data when it is determined by the invalid-data-determination means that the input/output data is invalid data; and where the determination-rule-storage means stores determination rules that correspond to user attributes; and the invalid-data-determination means references the determination rules that correspond to attribute information acquired by the attribute-information-acquisition means to determine whether the input/output data is invalid.

The first aspect of the invention can also comprise a use-authorization-determination means that references the user-information-storage means and determines whether the user corresponding to the ID information has authorization to use the computer; and where the stoppage means also stops operation executed by the input/output data when it is determined by the use-authorization-determination means that there is no authorization to use the computer; the use-authorization-determination means is activated before the invalid-data-determination means; and when it is determined by the use-authorization-determination means that there is no authorization to use the computer, at least one of following; the attribute-information-acquisition means or the invalid-data-determination means is not executed.

Also, the first aspect of the invention can comprise: a profile-storage means that stores log data related to the input/output data as profiles for each user; and an unusual-operation-determination means that references the profile-storage means and compares input/output data that was acquired by the data-acquisition means with the normal operation trend of the user to determine whether operation is unusual; and where the stoppage means also stops the operation executed by the input/output data when it is determined by the unusual-operation-determination means that operation is unusual.

Moreover, in the first aspect of the invention, the stoppage means can execute a process of interrupting a session when the data-acquisition means acquired input/output data from a network.

Furthermore, in the first aspect of the invention, the stoppage means can stop the process of executing a driver when the data-acquisition means acquired input/output data from an externally connected bus.

The second aspect of the invention could also be constructed as an invalidity-monitoring system for monitoring invalid data, which causes a computer to execute an invalid operation, and comprising: a data-acquisition means that acquires input/output data that is input or output over a network that is connected to the computer, or over an externally connected bus that connects the computer with an external device; an ID-information-identification means that identifies ID information from the input/output data for identifying a user; a user-information-storage means that stores attribute information for all users having authorization to use the computer; an attribute-information acquisition means that acquires at least part of the attribute data corresponding to the ID information from the user-information-storage means; a determination-rule-storage means for storing rules for determining whether the input/output data is invalid data; an invalid-data-determination means that references the determination-rule-storage means, and determining whether the input/output data is invalid data; and a notification means that notifies the terminal being operated by the user or administrator that the operation being executed by the input/output data is an invalid operation when it is determined by the invalid-data-determination means that the input/output data is invalid data; and where the determination-rule-storage means stores determination rules that correspond to user attributes; and the invalid-data-determination means references the determination rules that correspond to attribute information acquired by the attribute-information-acquisition means to determine whether the input/output data is invalid.

With this invention, when monitoring invalid data which caused a computer to execute an inval id operation, it is possible to not only monitor data that is input or output over a network, but also monitor data that is input or output between the computer and an external device, making it possible to prevent the leakage of information due to invalid output of data by an unauthorized person or by a person posing as an authorized person.

Also, by using user attribute information that is registered in advance for one rule item, it is possible to set various rules for determining invalidity. Moreover, by using attribute information to determine whether there is authorization to use the computer before applying rules, it is possible to make the process of determining invalidity more efficient. Furthermore, by recording an operation log for each user as user profiles, it becomes possible to identify patterns of unusual operation that cannot be determined using rules, and thus it is possible to determine whether there is a possibility that a third party is posing as an authorized user, and to determine operation, which even though it is in the range of being authorized, could be an invalid operation that is not normally executed.

### BRIEF EXPLANATION OF THE DRAWINGS

FIG. 1 is a drawing showing an example of the invalidity-monitoring system of the present invention that is used for monitoring a network.
FIG. 2 is a drawing showing an example of the invalidity-monitoring system of the present invention that is used for monitoring the connection with external devices.
FIG. 3 is a drawing showing the installation position of the invalidity-monitoring system of the present invention.
FIG. 4 is a block diagram showing a first configuration of the invalidity-monitoring system of the present invention.
FIG. 5 is a block diagram showing a second configuration of the invalidity-monitoring system of the present invention.
FIG. 6 is a drawing showing an example of the user-data-storage unit of the invalidity-monitoring system of the present invention.
FIG. 7 is a drawing showing an example of the invalidity-rule-storage unit of the invalidity-monitoring system of the present invention.
FIG. 8 is a flowchart showing the flow of the invalidity-monitoring program of the present invention.

### DESCRIPTION OF THE PREFERRED EMBODIMENTS

The preferred embodiments of the invention will be explained in detail I below using the drawings. The embodiments explained below are only examples, and the invention is not limited to these embodiments.

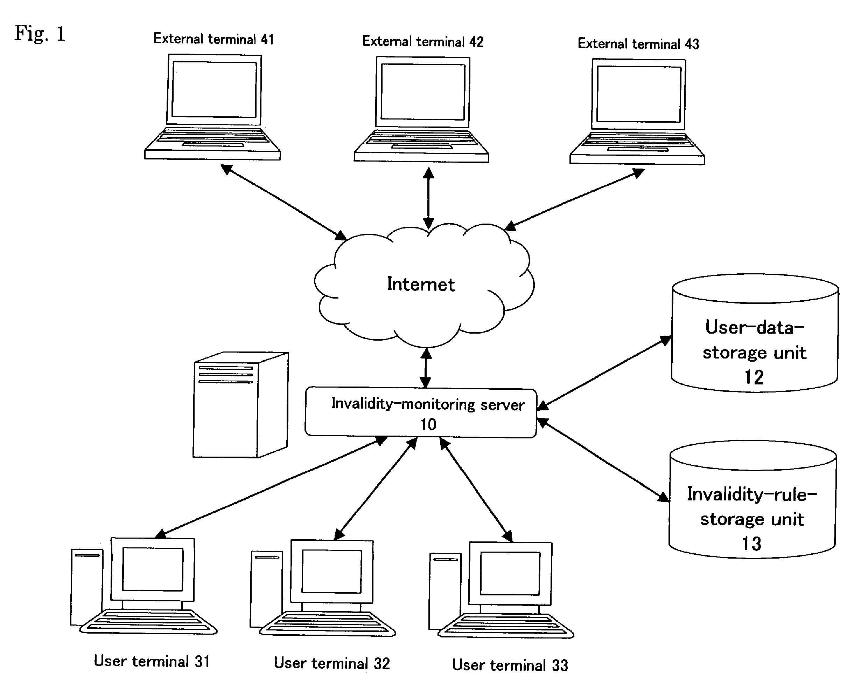

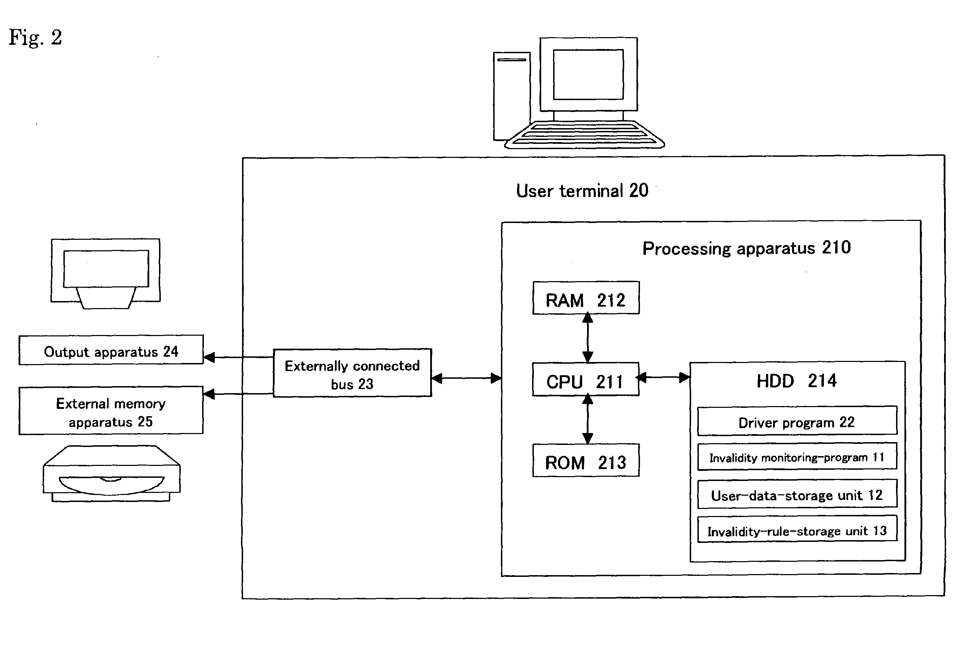

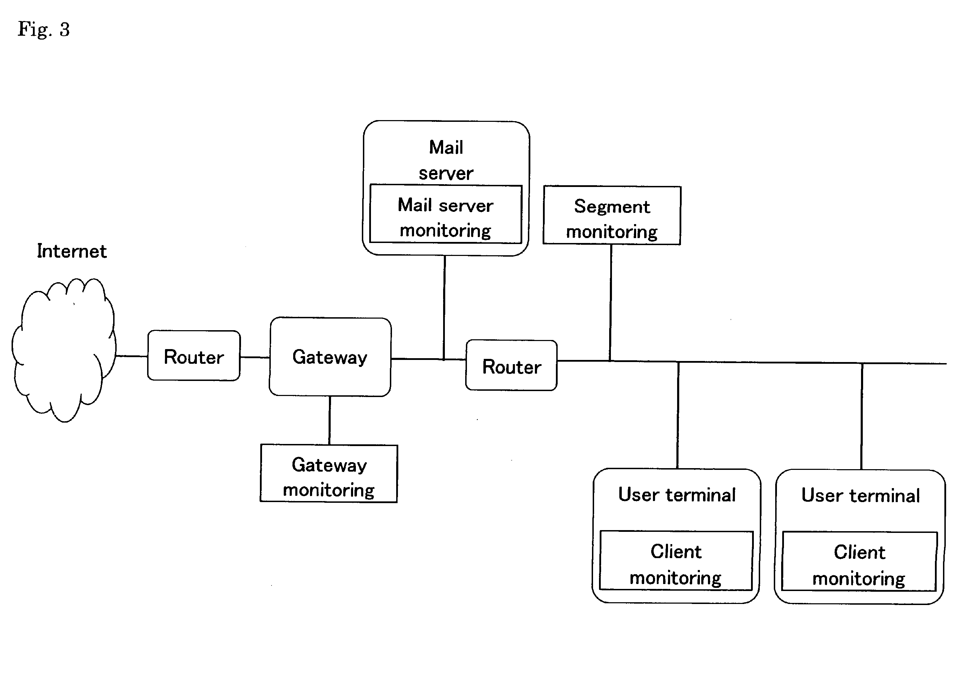

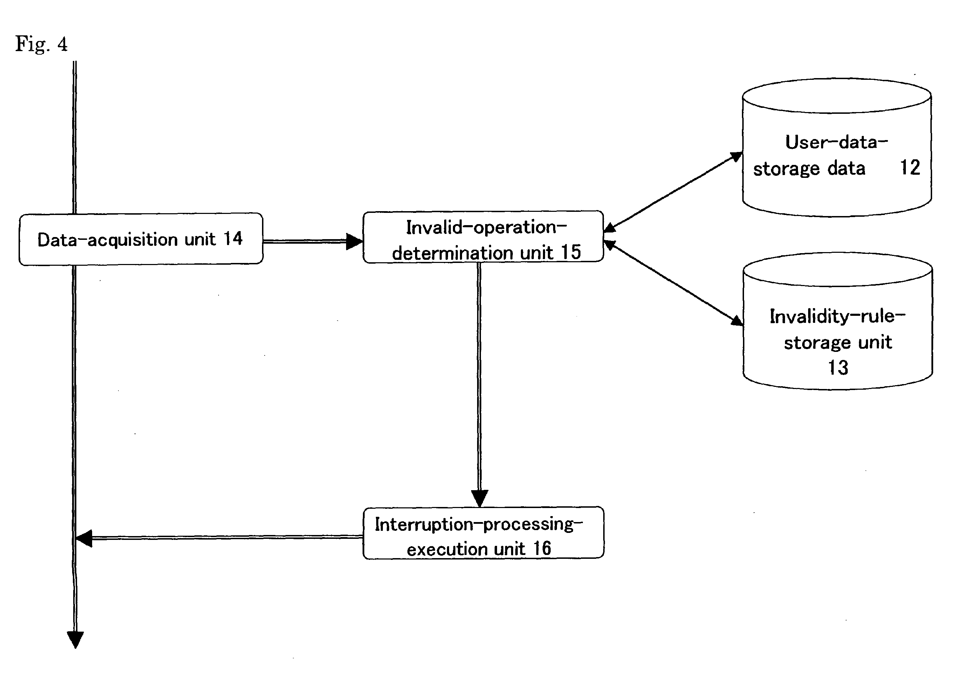

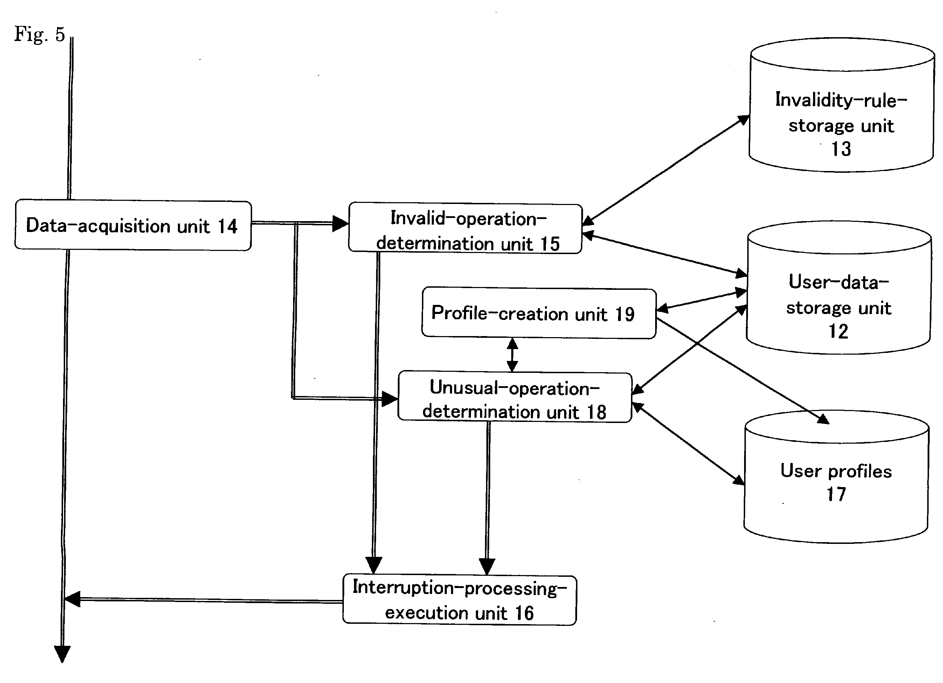

FIG. 1 and FIG. 2 are drawings showing examples of using the invalidity-monitoring system of this invention to monitor a network and to monitor the connection with external devices. FIG. 3 is a drawing showing the installation position of the invalidity-monitoring system of the invention. FIG. 4 and FIG. 5 are block diagrams showing a first and second configuration of the inval idity-monitoring system of the invention.

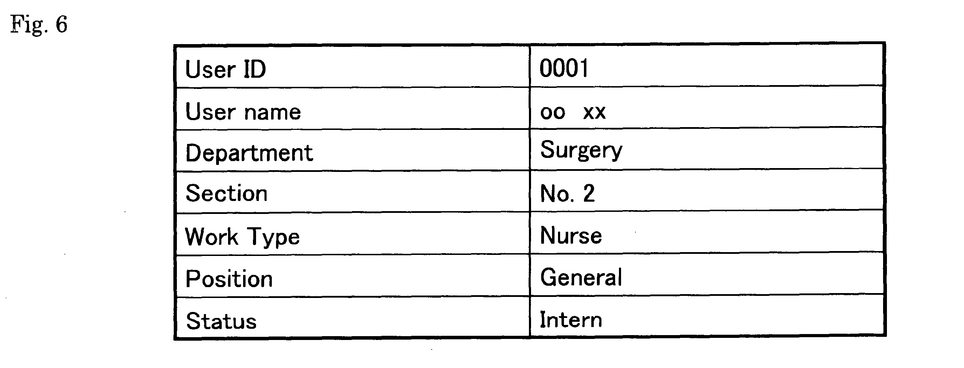

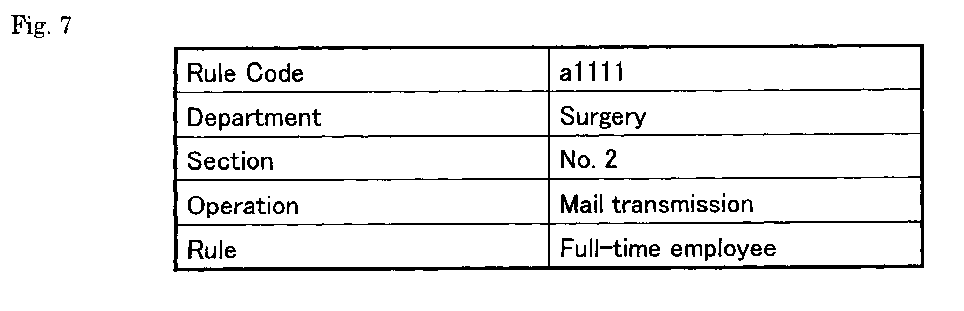

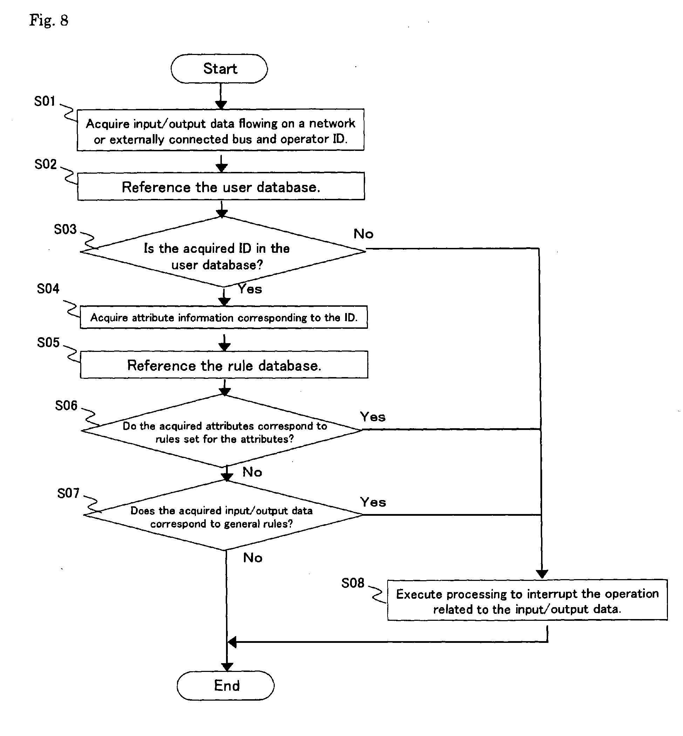

FIG. 6 is a drawing showing an example of the user-data-storage unit of the invalidity-monitoring system of the invention. FIG. 7 is a drawing showing an example of the invalidity-rule-storage unit of the invalidity-monitoring system of the invention. FIG. 8 is a flowchart showing the flow of the invalidity-monitoring program of the invention.

The invalidity-monitoring system of this invention is capable of not only monitoring various kinds of data that flow over a network, but is also capable of monitoring an externally connected bus for connecting to external devices including output apparatus such as a printer and the like, and external memory apparatus such as an external disk drive and the like. As shown in FIG. 3, the inval idity-monitoring system of this invention can be located in the gateway between an internal network, such as an in-office LAN, and the Internet, and can monitor a network, or can be located in a mail server, and can monitor sending and receiving of e-mail that is exchanged over a network. Also, it can be used for monitoring segments in an internal network, or can also be used for monitoring connections between individual user terminals and network, or connections between individual user terminals and external devices.

FIG. 1 is an example of the case when the system is used for monitoring a network, and the invalidity-monitoring system of this invention is constructed so that it comprises: an invalidity-monitoring server 10, a user-data-storage unit 12 and an invalidity-rule-storage unit 13. The invalidity-monitoring server 10 can be such that it is located in the gateway between an internal network and the Internet, and monitors the leakage of invalid data from the entire internal network, or can be such that it is located in an internal network, and monitors the leakage of invalid data in segments of the internal network.

The invalidity-monitoring server 10 acquires all of the input/output data that flows along the network and acquires information from the user-data-storage unit 12 related to the attributes of the user who is performing input/output of data. In addition to general rules for determining invalid data, rules for determining invalidity according to the attributes of a user are stored in the invalidity-rule-storage unit 13; and the invalidity-monitoring server 10 references the invalidity-rule-storage unit 13 for referencing the general rules for determining invalidity related to the input/output data, and references the rules corresponding to the attributes acquired from the user-data-storage unit 12 in order to determine whether or not the input/output data is invalid. For input/output data that was determined to be inval id, the inval idity-monitoring server 10 executes processing to block the session for which input/output is being performed.

FIG. 2 is an example showing the case when the system is used for monitoring an externally connected bus, where the invalidity-monitoring system of the invention is constructed so that it comprises: an invalidity-monitoring program 11 that is stored in the HDD 214 of a processing apparatus 210, a user-data-storage unit 12 and an invalidity-rule-storage unit 13; and where the program and stored data are read from the HDD 214 when monitoring is executed, and computation processing is performed by the processing apparatus 210. In the processing apparatus 210, a CPU 211 activates various fundamental programs that are stored in ROM 213 for performing hardware control such as input control or output control in order to execute monitoring by the invalidity-monitoring program 11 that is stored in the HDD 214, and using RAM 212 that functions as a work area for the invalidity-monitoring program 11, performs computation processing. In the computation process of the invalidity-monitoring program 11, necessary data are read from the user-data-storage unit 12 and invalidity-rule-storage unit 13 in the HDD 214, and used. In the processing apparatus, it is also possible to use another memory medium, such as a flash memory that is capable of storing a program, instead of the HDD 214 that stores the program.

When the driver program 22 is read by the processing apparatus 210 and instruction data for a print out or for writing to an external disc is sent to an externally connected bus 23, the invalidity-monitoring program acquires the instruction data flowing on the externally connected bus 23 and acquires information from the user-data-storage unit 12 about the attributes of the user performing operation related to that instruction data. In addition to general rules for determining invalid data, rules for determining invalidity according to user attributes are stored in the invalidity-rule-storage unit 13, and together with executing processing for determining whether or not the instruction data corresponds to general determination rules that are stored in the invalidity-rule-storage unit 13, the invalidity-monitoring program 11 executes processing for determining whether the instruction data corresponds to attribute rules acquired from the user-data-storage unit 12. For instruction data that is determined to be inval id, the invalidity-monitoring program 11 executes processing to stop the processing executed by the driver program 22, for example, executes a process such as stopping a print out, or stopping communication with a computer that is directly connected to the externally connected bus 23.

The method by the invalidity-monitoring server 10 shown in FIG. 1, and the invalidity-monitoring program 11 shown in FIG. 2 for determining invalidity will be explained in further detail using FIG. 4 and FIG. 5.
FIG. 4 shows a determination method in which rules according to user attributes are added to general rules for determining invalidity, and FIG. 5 shows a system in which not only is determination performed on a rule basis, but in which operating patterns are determined from profiles of each user, and invalidity is determined when there is unusual operation.

Determination of invalidity as shown in FIG. 4 is performed in the order of first having a data-acquisition unit 14 acquire data which will be the target of validity determination, then having an invalid-operation-determination unit 15 determine whether there is invalid operation on a rule basis, and finally having an interruption-processing-execution unit 16 stop processing in question. These units do not have to be physically separated from each other, but can each be stored in the HDD 214 as a part of the invalidity-monitoring program 11 that executes them, and can be read in order by the CPU 211 that executes computation processing with RAM 212 functioning as a work area.

The data-acquisition unit 14 acquires data that is flowing on the network or on an externally connected bus. The acquired data includes ID data for identifying the user executing the operation related to the data. The ID data is specified by the login ID or the like when a user logins to a computer.

The invalid-operation-determination unit 15 acquires user attribute information from the user-data-storage unit 12 that corresponds to the user ID data that was acquired by the data-acquisition unit 14. FIG. 6 is an example of user attribute information that is stored in the user-data-storage unit 12, where records for each user store a user ID, and attribute information such as department, work type, and the like.

Next, the invalid-operation-determination unit 15 references the invalidity-rule-storage unit 13 and determines whether or not the data acquired by the data-acquisition unit 14 corresponds to a rule determining that it is invalid data. General rules for determining invalidity regardless of user attributes, and attribute rules that determine unauthorized events according to user attributes are stored in the inval idity-rule-storage unit 13. The former are rules that are generally used for determining invalidity based on a keyword, URL, ID address, MAC address or the like. The latter are rules such as operation authorization that is set for a specific operation according to an attribute such as department or work position.

FIG. 7 shows an example of determination rules that are set according to user attributes stored in the invalidity-rule-storage unit 13. Attributes to be targeted and rules to be applied are stored in records that are set up in rule units, and in this example, only full-time employees are given authorization to send e-mail. For example, when a nurse intern tries to send e-mail in the example shown in FIG. 6, it is determined that the intern is not authorized to send e-mail, and the e-mail sending process is stopped.

When the invalid-operation-determination unit 15 determines that the operation related to the acquired data is an inval id operation in this way, the interruption-processing-execution unit 16 executes a process for stopping the process executed by that operation. In other words, a blocking process is executed for the data that is input or output over the network for the session for which input/output was performed, or processing such as stopping a print out or stopping writing to an external disc is executed for the execution-processing data that is sent to an externally connected bus.

In the invalid-operation-determination unit 15, when there is no data corresponding to the user ID when acquiring user attribute information from the user-data-storage unit 12, or when the user ID is invalid due to the retirement of the user or the like, access is taken to be by an unauthorized party, and the operation is determined to be invalid without performing determination by the invalidity-rule-storage unit 13, and the operation can be interrupted by the interruption-processing-execution unit 16. By determining that access is from an unauthorized party before performing determination on a rule basis, the processing load of the system is reduced, and it becomes possible to perform determination and execute the interrupt process quickly.

In the invalidity determination shown in FIG. 5, the data-acquisition unit 14 acquires data for invalidity determination, the invalid-operation-determination unit 15 determines whether there is invalid operation on a rule basis, an unusual-operation-determination unit 18 determines whether there is invalid operation from operation patterns for each of the user and not on a rule basis, and the interruption-processing-execution unit 16 stops the process in question. As in the case shown in FIG. 4, these units do not need to be physically separated from each other, but can be stored in the HDD 214 as parts of the invalidity-monitoring program 11 that executes them, and can be read in order by the CPU 211 that executes computation processing with RAM 212 functioning as a work area.

Also in FIG. 5, the processing of having the data-acquisition unit 14 acquire target data for determination, having the invalid-operation-determination unit 15 determine on a rule basis whether there is invalid operation, and having the interruption-processing-execution unit 16 stop the process in question, is the same as the processing shown in FIG. 4. This configuration is characterized in that a profile-creation unit 19 creates profiles for each user, and the unusual-operation-determination unit 18 determines whether there is invalid operation from the operating patterns of each user.

For the data that was acquired by the data-acquisition unit 14, invalidity determination is performed on a rule basis by the invalid-operation-determination unit 15, and is performed according to the operation patterns of each user by the unusual-operation-determination unit 18. Past operation patterns for each user are registered in the user profiles 17, and the unusual-operation-determination unit 18 compares the operation related to the acquired data with the operation pattern for that user that is registered in the user profiles 17, and when it determines that the operation is invalid, the interruption-processing-execution unit 16 interrupts the process. For example, when a user performs an operation at certain times of the day when the user does not usually operate, or when the user executes a certain type of operation numerous times that the user does not normally execute, it is determined that there is a possibility that the user executes an invalid operation, or that a third party is posing as an authorized user using someone else's ID, and the process is interrupted.

The operation patterns that are registered in the user profiles 17 can be created from data that is used in the determination by the unusual-operation-determination unit 18, and user attribute information from the user-data-storage unit 12. It is also possible to use a log of data acquired by the data-acquisition unit 14. The profiles can be updated by an online process that is executed each time new data is acquired, or can be updated by periodic batch processing.

There is a 'knowledge engine' in the unusual-operation-determination unit 18 for comparing operation with user profiles 17 and determining whether the operation is unusual operation. The knowledge engine comprises an artificial intelligence function that is capable of discriminating between normal operation and unusual operation, where the artificial intelligence can be configured using a Bayesian network, or can be configured using a neural network.

In the embodiments explained above, processing is executed to block a session when operation is determined to be invalid operation, and in the case of execution-processing data over an externally connected bus, processing is executed such as stopping a print out, or stopping writing to an external disc, however, construction could also be such that when operation is determined to be invalid operation, a warning is sent to the user executing that operation or to the computer or network administrator.

The basic flow of the invalidity-monitoring program of the invention will be explained using the flowchart shown in FIG. 8. First, the program acquires input/output data that is flowing on the network or externally connected bus, and the ID of the operator that executed the operation related to that input/output data (S01). For the acquired ID, the program references the user database that stores user attribute information (S02), and when that ID does not exist in the user database (S03), determines that operation is by an unauthorized party, and executes processing to stop the operation related to that input/output data (S08).

When the ID exists in the user database (S03), the program acquires attribute information related to that ID from the user database (S04). Next, the program references the rule database (S05), and determines whether the acquired attributes correspond to the rules set for the attributes (S06). When the attributes correspond, the program determines that operation is by a party that is unauthorized for that operation, and executes processing to stop the operation related to that input/output data (S08). When the attributes do not correspond, the program determines whether the acquired input/output data corresponds to general rules (S07). When the data corresponds, the program determines that the operation is an invalid operation, and executes processing to stop the operation related to that input/output data (S08). When the data does not correspond, the program determines that the operation is proper, and the operation related to that input/output data is executed as is.

## Claims

1. An invalidity-monitoring program for monitoring invalid data, which causes a computer to execute an invalid operation, and causes said computer to execute:
a step of acquiring input/output data that is input or output over a network that is connected to said computer, or over an externally connected bus that connects said computer with an external device;
a step of identifying ID information from said input/output data for identifying a user;
a step of acquiring at least part of the attribute data corresponding to said ID information from a user-information-storage unit that stores attribute information for all users having authorization to use said computer;
a step of referencing a determination-rule-storage unit that stores rules for determining whether said input/output data is invalid data, and determining whether said input/output data is invalid data; and
a step of stopping execution by said input/output data when it is determined in said invalid-data-determination step that said input/output data is invalid data; wherein
said determination-rule-storage unit stores determination rules that correspond to user attributes; and
in said step of determining whether said input/output data is invalid data, references said determination rules that correspond to attribute information acquired in said step of acquiring attribute information to determine whether said input/output data is invalid.

2. The invalidity-monitoring program of claim 1 that causes said computer to execute:
a step of referencing said user-information-storage unit and determining whether the user corresponding to said ID information has authorization to use said computer; and
a step of stopping operation by said input/output data when it is determined in said step of determining authorization that there is no authorization to use said computer; wherein
said step of determining authorization is executed before said step of determining whether said input/output data is invalid data; and
when it is determined in said step of determining authorization that there is no authorization to use said computer, said program causes said computer to not execute at least one of the fol lowing; said step of acquiring attribute information or said step of determiningwhether said input/output data is invalid data.

3. The invalidity-monitoring program of claim 1 that causes said computer to execute:
a step of referencing a profile-storage unit that stores log data related to said input/output data as profiles for each user, and comparing input/output data that was acquired in said data-acquisition step with the normal operation trend of said user to determine whether operation is unusual; and
stopping the operation executed by said input/output data in said step of stopping operation executed by said input/output'data also when it is determined in said step of determining whether operation is unusual that operation is unusual.

4. The invalidity-monitoring program of any one of the claims 1 to 3 that executes a process of interrupting a session in said step of stopping the operation executed by said input/output data when said input/output data is acquired from a network in said step of acquiring input/output data.

5. The invalidity-monitoring program of any one of the claims 1 to 3 that stops the process of executing a driver in the step of stopping the operation executed by said input/output data when said input/output data is acquired from an externally connected bus in said step of acquiring input/output data.

6. An invalidity-monitoring program for monitoring invalid data, which causes a computer to execute an invalid operation, and causes said computer to execute:
a step of acquiring input/output data that is input or output over a network that is connected to said computer, or over an externally connected bus that connects said computer with an external device;
a step of identifying ID information from said input/output data for identifying a user;
a step of acquiring at least part of the attribute data corresponding to said ID information from a user-information-storage unit that stores attribute information for all users having authorization to use said computer;
a step of referencing a determination-rule-storage unit that stores rules for determining whether said input/output data is invalid data, and determining whether said input/output data is invalid data; and
a step of notifying the terminal being operated by said user or administrator that the operation being executed by said input/output data is an invalid operation when it is determined in said step of determining whether said input/output data is invalid that said input/output data is invalid data; wherein
said determination-rule-storage unit stores determination rules that correspond to user attributes; and
in said step of determining whether said input/output data is invalid data, references said determination rules that correspond to attribute information acquired in said step of acquiring attribute information to determine whether said input/output data is invalid data.

7. An invalidity-monitoring method for monitoring invalid data, which causes a computer to execute an invalid operation, comprising:
a step whereby said computer acquires input/output data that is input or output over a network that is connected to said computer, or over an externally connected bus that connects said computer with an external device;
a step whereby said computer identifies ID information from said input/output data for identifying a user;
a step whereby said computer acquires at least part of the attribute data corresponding to said ID information from a user-information-storage unit that stores attribute information for all users having authorization to use said computer;
a step whereby said computer references a determination-rule-storage unit that stores rules for determining whether said input/output data is invalid data, and determines whether said input/output data is invalid data; and
a step whereby said computer stops execution by said input/output data when it is determined in said invalid-data-determination step that said input/output data is invalid data; wherein
said determination-rule-storage unit stores determination rules that correspond to user attributes; and
in said step of determining whether said input/output data is invalid data, references said determination rules that correspond to attribute information acquired in said step of acquiring attribute information to determine whether said input/output data is invalid.

8. An invalidity-monitoring method for monitoring invalid data, which causes a computer to execute an invalid operation, comprising:
a step whereby said computer acquires input/output data that is input or output over a network that is connected to said computer, or over an externally connected bus that connects said computer with an external device;
a step whereby said computer identifies ID information from said input/output data for identifying a user;
a step whereby said computer acquires at least part of the attribute data corresponding to said ID information from a user-information-storage unit that stores attribute information for all users having authorization to use said computer;
a step whereby said computer references a determination-rule-storage unit that stores rules for determining whether said input/output data is invalid data, and determines whether said input/output data is invalid data; and
a step whereby said computer notifies the terminal being operated by said user or administrator that the operation being executed by said input/output data is an invalid operation when it is determined in said step of determining whether said input/output data is invalid that said input/output data is invalid data; wherein
said determination-rule-storage unit stores determination rules that correspond to user attributes; and
in said step of determining whether said input/output data is invalid data, references said determination rules that correspond to attribute information acquired in said step of acquiring attribute information to determine whether said input/output data is invalid.

9. An invalidity-monitoring system for monitoring invalid data, which causes a computer to execute an invalid operation, and comprising:
a data-acquisition means for acquiring input/output data that is input or output over a network that is connected to said computer, or over an externally connected bus that connects said computer with an external device;
an ID-information-identification means for identifying ID information from said input/output data for identifying a user;
a user-information-storage means for storing attribute information for all users having authorization to use said computer;
an attribute-information acquisition means for acquiring at least part of the attribute data corresponding to said ID information from said user-information-storage means;
a determination-rule-storage means for storing rules for determining whether said input/output data is invalid data;
an invalid-data-determination means for referencing said determination-rule-storage means, and determining whether said input/output data is invalid data; and
a stoppage means for stopping execution by said input/output data when it is determined by said invalid-data-determination means that said input/output data is invalid data; wherein
said determination-rule-storage means stores determination rules that correspond to user attributes; and
said invalid-data-determination means references said determination rules that correspond to attribute information acquired by said attribute-information-acquisition means to determine whether said input/output data is invalid.

10. The invalidity-monitoring system of claim 9 further comprising:
a use-authorization-determination means for referencing said user-information-storage means and determining whether the user corresponding to said ID information has authorization to use said computer; and wherein
said stoppage means also stops operation executed by said input/output data when it is determined by said use-authorization-determination means that there is no authorization to use said computer;
said use-authorization-determination means is activated before said invalid-data-determination means; and
when it is determined by said use-authorization-determination means that there is no authorization to use said computer, at least one of the following; said attribute-information-acquisition means or said invalid-data-determination means is not executed.

11. The invalidity-monitoring system of claim 9 further comprising:
a profile-storage means for storing log data related to said input/output data as profiles for each user; and
an unusual-operation-determination means for referencing said profile-storage means and comparing input/output data that was acquired by said data-acquisition means with the normal operation trend of said user to determine whether operation is unusual; wherein
said stoppage means also stops the operation executed by said input/output data when it is determined by said unusual-operation-determination means that operation is unusual.

12. The invalidity-monitoring system of any one of the claims 9 to 11 wherein
said stoppage means executes a process of interrupting a session when said data-acquisition means acquired said input/output data f rom a network.

13. The invalidity-monitoring system of any one of the claims 9 to 11 wherein
said stoppage means stops the process of executing a driver when said data-acquisition means acquired said input/output data from an externally connected bus.

14. An invalidity-monitoring system for monitoring invalid data, which causes a computer to execute an invalid operation, and comprising:
a data-acquisition means for acquiring input/output data that is input or output over a network that is connected to said computer, or over an externally connected bus that connects said computer with an external device;
an ID-information-identification means for identifying ID information from said input/output data for identifying a user;
a user-information-storage means for storing attribute information for all users having authorization to use said computer;
an attribute-information acquisition means for acquiring at least part of the attribute data corresponding to said ID information from said user-information-storage means;
a determination-rule-storage means for storing rules for determining whether said input/output data is invalid data;
an invalid-data-determination means for referencing said determination-rule-storage means, and determining whether said input/output data is invalid data; and
a notification means for notifying the terminal being operated by said user or administrator that the operation being executed by said input/output data is an invalid operation when it is determined by said invalid-data-determination means that said input/output data is invalid data; wherein
said determination-rule-storage means stores determination rules that correspond to user attributes; and
said invalid-data-determination means references said determination rules that correspond to attribute information acquired by said attribute-information-acquisition means to determine whether said input/output data is invalid.
